# EUROPÄISCHE PATENTANMELDUNG

(11) **EP 1 083 132 A2**
(43) Veröffentlichungstag der Anmeldung: **14.03.2001**
(21) Anmeldenummer: 00116846.7
(22) Anmeldetag: 04.08.2000
(51) Int. Cl.: B65D 81/38, B65D 33/25, B65D 33/18

(54) **Tragetasche**

(30) Priorität: 09.08.1999 DE 19936753; 04.09.1999 DE 19942168
(71) Anmelder: Stollpack Verpackungs GmbH, 51427 Bergisch Gladbach (DE)
(72) Erfinder: Ewald Scholl, 51427 Bergisch Gladbach (DE)
(74) Vertreter: Gesthuysen, von Rohr & Eggert

(57) **Zusammenfassung**

Die Erfindung betrifft eine Tragetasche (1) aus einem aus Kunststoff bestehenden Folienmaterial (2), mit einem Taschenbereich (3), mit einem Verschlußbereich (4) und mit einem Griffbereich (5), wobei das Folienmaterial (2) mehrschichtig ist und wenigstens eine erste, dem Tascheninneren (10) zugewandte Schicht (11) und eine zweite, außenseitige Schicht (12) aufweist und wobei zwischen den einzelnen Schichten (11,12,13) des Folienmaterials (2) jeweils ein Luftpolster (14,15) vorgesehen ist. Um eine Tragetasche der zuvor genannten Art zur Verfügung zu stellen, die einfach und kostengünstig hergestellt werden kann, einen hohen Tragekomfort bietet und bei der das rasche Schmelzen von in der Tragetasche beförderter Tiefkühlkost verhindert oder jedenfalls verzögert wird, ist erfindungsgemäß vorgesehen, daß auf die Außenseite der zweiten Schicht (12) eine Aluminium-Schicht oder -Beschichtung aufgebracht ist.

## Beschreibung

Die Erfindung betrifft eine Tragetasche nach den Oberbegriffen der Patentansprüche 1 und 6.

Eine Tragetasche nach dem Oberbegriff des Patentanspruchs 1 ist bereits aus der DE 295 12 942 U1 bekannt. Diese bekannte Tragetasche besteht aus einem zweischichtigen Folienmaterial mit einer Schaumfolie mit reflektierender Oberfläche und einer zusätzlichen äußeren Deckfolie, wobei sich zwischen der Deckfolie und der reflektierenden Oberfläche der Schaumfolie ein Luftpolster befindet, das ebenfalls isolierend wirken soll. Nachteilig bei der bekannten Tragetasche ist jedoch, daß in der Tragetasche zu transportierendes Kühlgut nur eine vergleichsweise geringe Zeit hinreichend gekühlt wird.

Des weiteren geht aus der DE 15 36 064 A eine Tragetasche nach dem Oberbegriff des Patentanspruchs 6 hervor. Diese bekannte Tragetasche hat den Vorteil, daß sie aufgrund ihres Umschlags leicht geöffnet und geschlossen und vergleichsweise gut getragen werden kann. Wird mit der bekannten Tragetasche Tiefkühlkost befördert, kann diese sehr schnell auftauen und damit verderben.

Aufgabe der vorliegenden Erfindung, ist es eine Tragetasche zur Verfügung zu stellen, die einfach und kostengünstig hergestellt werden kann, die vorzugsweise einen hohen Tragekomfort bietet und bei der das rasche Auftauen von in der Tragetasche beförderter Tiefkühlkost verhindert oder jedenfalls verzögert wird.

Die zuvor hergeleitete und beschriebene Aufgabe ist bei einer Tragetasche der im Patentanspruch 1 angegebenen Art erfindungsgemäß im wesentlichen dadurch gelöst, daß auf die Außenseite der zweiten Schicht eine Aluminiumschicht bzw. -beschichtung aufgebracht ist. Diese Aluminiumschicht bildet damit die Außenseite der Tragetasche. Der Erfindung liegt die Erkenntnis zugrunde, daß die Realisierung eine Aluminiumschicht in Verbindung mit einer Tragetasche, die besonders für Tiefkühlkost geeignet ist, grundsätzlich von Vorteil ist. Beim Stand der Technik gemäß der DE 295 12 942 U1 ist es so, daß die wärmeisolierende Schicht mit reflektierender Oberfläche die innere Schicht des Folienmaterials bildet und außenseitig von einer Deckfolie umgeben ist. Hierdurch ergibt sich zwar ein grundsätzlich ebenfalls eine Isolationswirkung ausübendes Luftpolster. Allerdings ist im Zusammenhang mit der Erfindung festgestellt worden, daß der Schichtaufbau der bekannten Tragetasche nicht zu einer Wärmeisolation in hinreichendem Maße führt. Bei Sonneneinstrahlung treten die Sonnenstrahlen durch die äußere Deckschicht, werden an der reflektierenden Oberfläche der inneren Schicht reflektiert und treten anschließend durch die äußere Deckschicht wieder aus. Durch den Eintritt der Sonnenstrahlen in das Luftpolster ergibt sich eine vergleichsweise starke Erwärmung der Luft im Luftposter. Dies ist insbesondere dann sehr nachteilig, wenn es sich um ein geschlossenes Luftpolster handelt, aus dem die erwärmte Luft nicht wieder abgeführt werden kann. Die in dem Luftpolster gespeicherte Energie wird zu einem erheblichen Teil der Tiefkühlkost zugeführt, was zum unerwünschten schnellen Auftauen führt.

Bei der Erfindung ist nun zur Vermeidung des vorgenannten Problems die Aluminiumschicht auf der Außenseite der zweiten Schicht vorgesehen. Auf die erfindungsgemäße Tragetasche einwirkende Sonnenstrahlen werden unmittelbar an der Außenseite der Tragetasche reflektiert, dringen also nicht in den Luftpolsterbereich der Tragetasche ein. Wenn überhaupt, ergibt sich bei der Erfindung eine geringe Erwärmung der Luft im Luftpolster. Die Folge davon ist, daß die erfindungsgemäße Tragetasche eine erheblich verbesserte Isolationswirkung hat.

Vorzugsweise besteht die innere Schicht, die direkt mit der Ware in Berührung steht, aus einem HDPE. Dieses Material verleiht der Tragetasche eine gewisse Steifigkeit und Reißfestigkeit. Demgegenüber besteht die zweite, äußere Schicht bevorzugt aus einem insbesondere mit Aluminium bedampften PE. Grundsätzlich ist es auch möglich, die zweite äußere Schicht, die aus PE bestehen kann, aber nicht muß, mit Aluminium zu kaschieren. In jedem Falle ergibt sich hierdurch eine hochglänzende Außenseite der Tragetasche, die nicht nur die direkte Sonneneinstrahlung reflektiert, sondern auch eine attraktive Werbefläche bietet, die je nach Kundenwunsch bedruckt werden kann.

Bei einer besonders bevorzugten Ausgestaltung der vorliegenden Erfindung weist das Folienmaterial eine dritte Schicht auf, die zwischen der ersten und der zweiten Schicht angeordnet ist. Die dritte Schicht an sich trägt bereits dazu bei, daß die Reißfestigkeit des Folienmaterials und damit der Tragetasche und gleichzeitig die Wärmeisolierung gegenüber einem nur zweischichtigen Folienmaterial verbessert ist. Besonders bevorzugt ist es in diesem Zusammenhang, daß die dritte Schicht aus einem aufgeschäumten PE besteht, um die Tragetasche insgesamt fülliger zu machen. Auch ist dieses Material sehr stark wärmeisolierend.

Um die Dichtigkeit der erfindungsgemäßen Tragetasche weiter zu verbessern und die Tragetasche im übrigen im oberen Öffnungssegment stabiler auszugestalten, weist der Verschlußbereich wenigstens einen sich vorzugsweise über die gesamte Breite der Tragetasche erstreckenden Verschluß, insbesondere Druck- oder Klebverschluß auf. Bevorzugt ist der Druckverschluß mit einem auf der einen Seite vorgesehenen, ersten Verschlußteil mit einer zwischen zwei elastischen Schenkeln vorgesehenen Nut und einem auf der anderen Seite vorgesehenen zweiten Verschlußteil mit einem in die Nut eindrückbaren weiteren Schenkel versehen. Mit einem derart ausgebildeten Druckverschluß läßt sich schnell und in einfacher Weise die erfindungsgemäße Tragetasche verschließen.

Bei der im Patentanspruch 6 angegebenen Tragetasche ist zur Lösung der vorgenannten Aufgabe vorgesehen, daß der Verschlußbereich im Bereich des Umschlags zwischen der ersten Grifföffnung und der dritten Grifföffnung wenigstens einen sich im wesentlichen über die gesamte Breite der Tragetasche erstreckenden Verschluß, insbesondere einen Druck- und/oder einen Klebverschluß aufweist. Durch die Realisierung eines zusätzlichen Verschlusses im Verschlußbereich wird zunächst einmal die Isolationswirkung der erfindungsgemäßen Tragetasche beim Transport von Tiefkühlkost erheblich verbessert, da die Taschenöffnung der Tragetasche sicher verschlossen werden kann. Die Erfindung beschränkt sich jedoch nicht auf die Realisierung eines zusätzlichen Verschlusses im Bereich des Verschlußbereiches. Besondere Bedeutung kommt der Anordnung des Druck- oder Klebeverschlusses im Bereich des Umschlags zwischen der ersten und der dritten Grifföffnung zu.

Durch die Anordnung des Verschlusses in diesem Bereich wird beim Tragen der erfindungsgemäßen Tragetasche der Verschluß automatisch vom Benutzer - jedenfalls zumindest im Griffbereich - zugehalten, so daß ein unerwünschtes Öffnen nicht auftreten kann. Darüber hinaus verdickt sich der Griffbereich durch die Anordnung des zusätzlichen Verschlusses an der beanspruchten Stelle, so daß der Griff der erfindungsgemäßen Tragetasche für den Benutzer fülliger wird und die Tragetasche auch bei hohen zu transportierenden Lasten weniger stark in die Hand des Benutzers einschneidet, was insgesamt den Tragekomfort verbessert.

Insbesondere eignet sich die zuvor beschriebene Tragetasche in Verbindung mit der eingangs beschriebenen Ausführungsform. Durch eine Mehrschichtigkeit des Folienmaterials ergibt sich bei einer einfachen Ausgestaltung mit nur zwei Schichten im geschlossenen Zustand der Tragetasche ein sechsschichtiger Aufbau, bei Verwendung von drei Schichten des Folienmaterials sogar ein neunschichtiger Aufbau, wodurch sich ein sehr fülliger Griffbereich ergibt, der das Tragen der erfindungsgemäßen Tragetasche sehr angenehm macht.

Bei einer bevorzugten Ausführungsform der vorliegenden Erfindung ist das Folienmaterial auf der dem Umschlag gegenüberliegenden Seite des Taschenbereichs im Bereich der Grifföffnung zweilagig. Bei dieser Ausführungsform sind im Griffbereich sogar vier Lagen des Folienmaterials und damit zumindest acht, bevorzugt sogar zwölf Schichten vorgesehen, was die Griffigkeit des Griffbereichs weiter erhöht. Die zuvor angesprochene zweite Lage wird bevorzugt durch einen weiteren, eine vierte Grifföffnung aufweisenden Umschlag gebildet, der allerdings nicht - wie der eingangs beschriebene Umschlag - aufklappbar ist, sondern fest am Taschenbereich befestigt ist, nämlich über eine Querverschweißung. Der weitere Umschlag dient aber nicht nur zur Verbesserung des Griffbereichs, sondern stellt auch eine Verstärkung des oberen Endes des Taschenbereichs dar, so daß die Gefahr des Einreißens beim Einlegen von Waren in die Tragetasche in diesem Bereich erheblich verringert ist.

Bei einer weiteren besonders bevorzugten Ausgestaltung der Erfindung ist das Folienmaterial auch im Bereich der (dritten) Grifföffnung des Umschlags zweilagig, wobei es bevorzugt ist, daß die Zweilagigkeit über einen weiteren Umschlag gebildet wird und daß der weitere Umschlag über eine Querverschweißung mit dem eigentlichen Umschlag fest verbunden ist. Bei dieser Ausführungsform unter Berücksichtigung aller weiteren Umschläge ist es möglich, bei einem zweischichtigen Folienmaterial einen Schichtaufbau mit zehn Schichten und bei einem dreilagigen Folienmaterial mit fünfzehn Schichten zu erhalten. Es versteht sich, daß der Griffbereich mit einer derart hohen Anzahl an Schichten eine sehr große Auflagefläche bildet, was das Tragen der erfindungsgemäßen Tragetasche sehr angenehm macht.

Grundsätzlich ist es möglich, den Taschenbereich durch zwei separate, gegeneinandergelegte Folien zu bilden, die an den Längsrändern und am unteren Rand miteinander verschweißt werden. Bevorzugt ist es aber, daß das Folienmaterial zur Bildung des Taschenbereichs lediglich umgeschlagen ist.

Besonders bevorzugt ist es im übrigen, die gesamte Tragetasche aus ein und demselben Stück Folienmaterial herzustellen. Dies ist, auch mit den einzelnen zuvor erwähnten Umschlägen und weiteren Umschlägen ohne weiteres möglich.

Nachfolgend werden bevorzugte Ausführungsbeispiele der vorliegenden Erfindung näher beschrieben. Dabei zeigt
- Fig. 1: eine Draufsicht auf eine erfindungsgemäße Tragetasche im geöffneten Zustand,
- Fig. 2: eine Draufsicht auf die Tragetasche aus Fig. 1 im geschlossenen Zustand,
- Fig. 3: eine Querschnittsansicht entlang der Schnittlinie III - III aus Fig. 1,
- Fig. 4: einen vergrößerten Ausschnitt der Tragetasche aus Fig. 1 im geöffneten Zustand,
- Fig. 5: eine Querschnittsansicht entlang der Linie V - V aus Fig. 4,
- Fig. 6: eine Querschnittsansicht entlang der Schnittlinie VI - VI aus Fig. 1,
- Fig. 7: eine Querschnittsansicht entlang der Schnittlinie VII - VII aus Fig. 1,
- Fig. 8: eine Querschnittsansicht entlang der Schnittlinie VIII - VIII,
- Fig. 9: eine der Fig. 8 entsprechende Ansicht einer anderen Ausführungsform einer erfindungsgemäßen Tragetasche und
- Fig. 10: eine Draufsicht auf einen Zuschnitt für eine erfindungsgemäße Tragetasche.

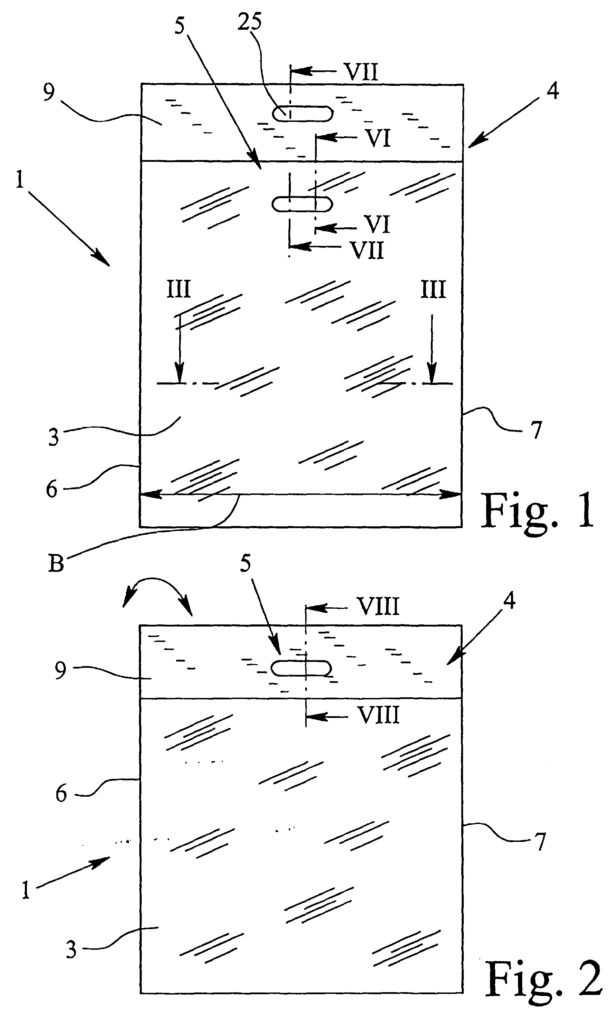

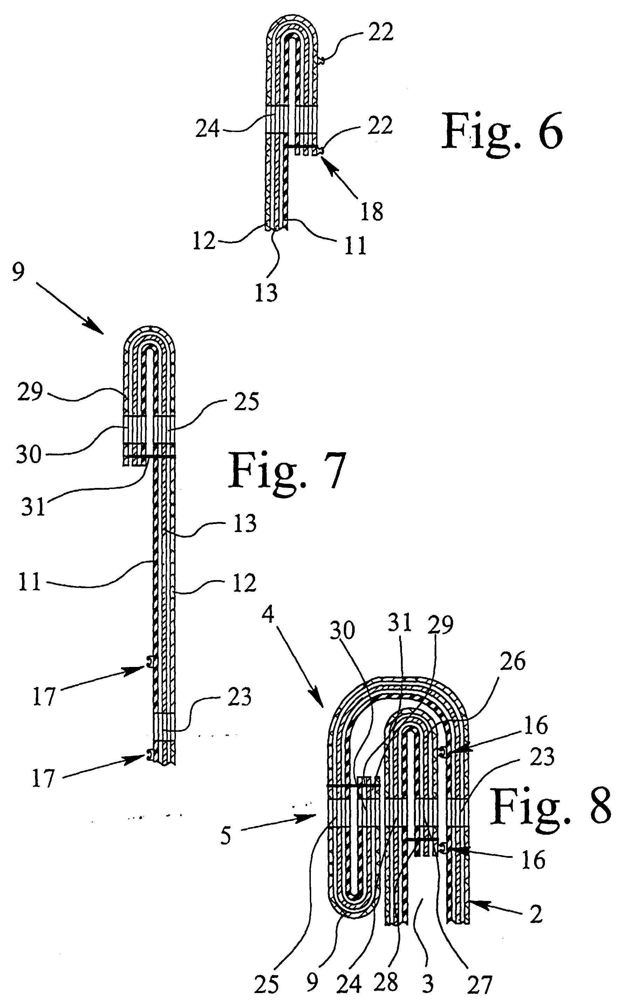

In den einzelnen Figuren ist eine Tragetasche 1 aus einem Folienmaterial 2 dargestellt, das vorzugsweise aus Kunststoff besteht. Die Tragetasche 1, die in Fig. 1 im geöffneten und in Fig. 2 im geschlossenen Zustand dargestellt ist, weist einen Taschenbereich 3, einen Verschlußbereich 4 und einen Griffbereich 5 auf. Wie sich insbesondere aus Fig. 8 ergibt, ist das Folienmaterial 2 im Bereich des Taschenbereichs 3 zweilagig, wobei die beiden Lagen des Folienmaterials 2 zumindest an den beiden Längsrändern 6, 7 des Taschenbereichs 3 jeweils über Längsverschweißungen 8 miteinander verbunden sind.

Wie sich insbesondere aus den Fig. 1, 2, 4, 8 und 9 ergibt, weist der Verschlußbereich 4 einen von dem Folienmaterial 2 gebildeten und sich über die gesamte Breite B der Tragetasche 1 erstreckenden Umschlag 9 auf, der, wie sich aus Fig. 1 ergibt, zum Öffnen der Tragetasche 1 aufgeschlagen und zum Schließen auf den Taschenbereich 3 umgeschlagen wird, wie dies in Fig. 2 dargestellt ist.

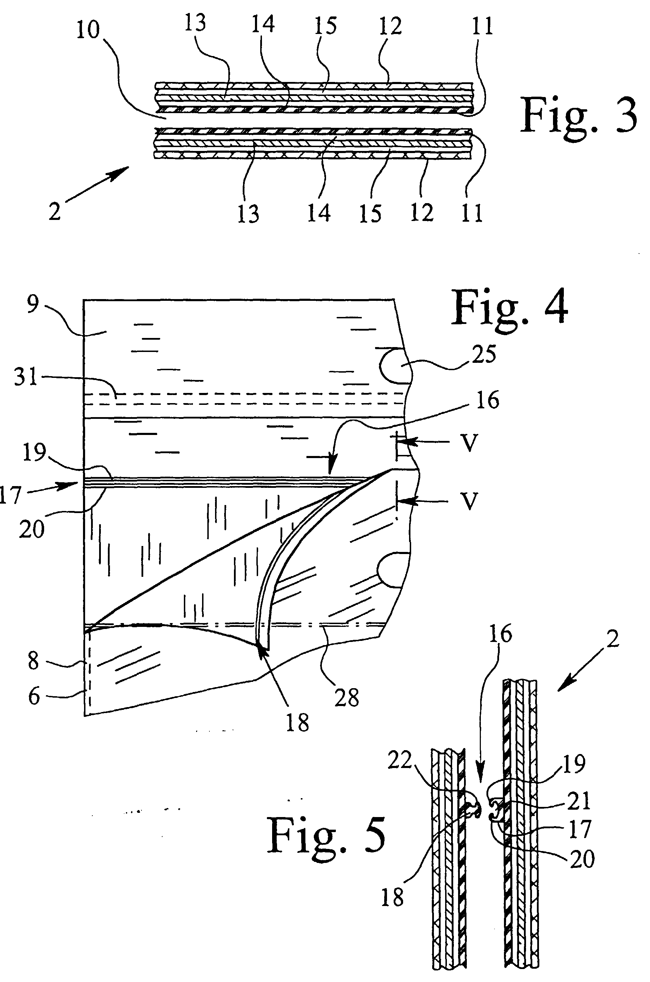

Wesentlich bei der Tragetasche 1 ist nun, daß das Folienmaterial 2 mehrschichtig ist, wie sich dies beispielsweise aus Fig. 3 ergibt, und eine erste, dem Tascheninneren 10 zugewandte Schicht 11 und eine zweite, außenseitige Schicht 12 aufweist. Bei dem dargestellten Ausführungsbeispiel ist im übrigen noch eine dritte Schicht 13 vorgesehen, die zwischen der ersten Schicht 11 und der zweiten Schicht 12 angeordnet ist. Die einzelnen Schichten 11, 12, 13 des Folienmaterials 2 sind derart angeordnet und miteinander verbunden, daß sich zwischen den einzelnen Schichten 11, 12, 13 jeweils Luftpolster 14, 15 befinden. Die erste Schicht 11 besteht vorliegend aus HDPE (high density polyethylene), während die zweite Schicht 12 aus einem mit Aluminium bedampften PE besteht. Auch eine Kaschierung mit Aluminium ist möglich. Die dritte, mittlere Schicht 13 besteht aus einem aufgeschäumten PE.

Wie sich insbesondere aus den Fig. 4, 5 und 8 ergibt, weist der Verschlußbereich 4 wenigstens einen sich über die gesamte Breite B der Tragetasche 1 erstreckenden Druckverschluß 16 auf. In Fig. 8 sind zwei Druckverschlüsse 16 dargestellt, nämlich ein oberer und ein unterer Druckverschluß 16. Obwohl es grundsätzlich möglich ist, zwei Druckverschlüsse 16 vorzusehen, ist es bevorzugt und ausreichend, lediglich einen Druckverschluß 16 zu verwenden. Die gewählte Darstellung von zwei Druckverschlüssen 16 dient lediglich dazu zu zeigen, an welcher Stelle sich ein Druckverschluß 16 befinden kann.

In diesem Zusammenhang darf darauf hingewiesen werden, daß bevorzugt nur der obere Durckverschluß 16 verwendet wird, da dieser leichter zugänglich ist als der untere Druckverschluß 16 und im übrigen beim Eingreifen in die einzelnen Grifföffnungen des Griffbereichs 5 von der Hand des Benutzers gehalten und umschlossen wird, was den Griffbereich 5 spürbar verstärkt und im übrigen dazu führt, daß der Druckverschluß 16 sich nicht ohne weiteres öffnet.

Die beiden in Fig. 8 dargestellten Druckverschlüsse 16 sind identisch ausgebildet. Daher wird nachfolgend nur noch auf einen der Druckverschlüsse 16 näher eingegangen. Der Druckverschluß 16 weist ein auf der einen Seite im Tascheninneren 10 der Tragetasche 1 vorgesehenes erstes Verschlußteil 17 und ein auf der gegenüberliegenden Seite im Tascheninneren 10 der Tragetasche 1 vorgesehenen zweiten Verschlußteil 18 auf. Das erste Verschlußteil 17 weist zwei elastische Schenkel 19, 20 auf, die eine Nut 21 begrenzen, die vorliegend hammerkopfartig ausgebildet ist. Das zweite Verschlußteil 18 weist einen in die Nut 21 eindrückbaren Schenkel 22 auf, der entsprechend der Ausbildung der Nut 21 hammerkopfartig ausgebildet ist. Er weist also Hinterschneidungen auf, die von einander zugewandten Vorsprüngen der Schenkel 19, 20 hintergriffen werden. Um eine gewisse Dichtwirkung und Stabilität zu erzielen, bestehen die beiden Verschlußteile 17, 18 aus einem elastischen aber etwas härteren Kunststoff, der es dennoch ohne weiteres zuläßt, die Tragetasche 1 auch im Bereich des Druckverschlusses 16 zu falten.

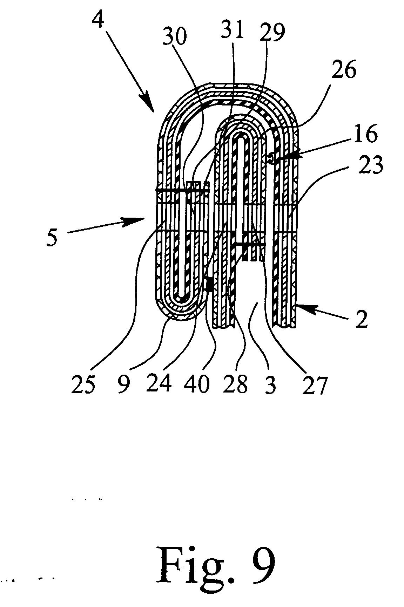

In Fig. 9 ist eine alternative Ausführungsform dargestellt. Hierbei weist der Verschlußbereich 4 einen sich über die gesamte Breite B der Tragetasche 1 erstreckenden Klebverschluß 40 auf. Der Klebverschluß 40 besteht vorliegend aus einem Klebestreifen, der sich im verschlossenen Zustand zwischen dem Umschlag 9 und der zugewandten Außenseite des Taschenbereichs 3 befindet. Bei dem Klebestreifen handelt es sich um einen Streifen, der beidseitig mit einer Klebeschicht versehen ist. Auf eine dieser Klebschichten ist eine Schutzschicht, insbesondere aus Silikon aufgebracht, die abziehbar ist. Die andere Klebeschicht ist an der dafür vorgesehenen Stelle an der Tragetasche 1 entsprechend aufgeklebt. Soll die Tragetasche 1 über den Klebverschluß 40 verschlossen werden, wird die Schutzschicht abgezogen und die Tragetasche kann nach Umschlagen des Umschlags 9 über den Klebverschluß 40 verschlossen werden. Bevorzugt ist es in diesem Zusammenhang im übrigen, daß die Klebeschichten des Klebestreifens unterschiedlich stark kleben. Während der Klebestreifen auf der Seite, wo er ursprünglich angeklebt ist, dauerhaft haften soll, soll die Klebverbindung zum Öffnen der Tragetasche 1 bzw. Umschlagen des Umschlages 9 wieder leicht lösbar sein. Im übrigen soll die leicht lösbare Klebeschicht auch mehrfach verwendbar sein. Dies setzt eine entsprechende Zusammensetzung des Klebstoffes voraus.

Wichtig bei der Tragetasche 1 ist weiterhin, daß der Griffbereich 5 im oberen Bereich des Taschenbereichs 3 auf gegenüberliegenden Seiten eine erste und eine zweite Grifföffnung 23, 24 und im Umschlag 9 eine dritte Grifföffnung 25 aufweist. Wichtig ist weiterhin, daß die erste, die zweite und die dritte Grifföffnung 23, 24, 25 derart im Folienmaterial 2 angeordnet und ausgebildet sind, daß sie im geschlossenen Zustand der Tragetasche 1, wie dies in Fig. 2 dargestellt ist, miteinander ausgefluchtet sind, so daß sich eine Durchgangsgrifföffnung ergibt. Letztlich wird der Griffbereich 5 vom oberen Abschnitt des Taschenbereichs 3 und von einem Teil des Umschlags 9 gebildet.

Wie sich insbesondere aus den Fig. 6, 8 und 9 ergibt, ist das Folienmaterial 2 auf der dem Umschlag 9 gegenüberliegenden Seite des Taschenbereichs 3 im Bereich der zweiten Grifföffnung 24 zweilagig. Hierzu weist das Folienmaterial 2 einen weiteren Umschlag 26 auf, der mit einer vierten Grifföffnung 27 versehen ist, die mit den übrigen Grifföffnungen ausgefluchtet ist. Der weitere Umschlag 26 kann im Gegensatz zum Umschlag 9 jedoch nicht bedarfsweise umgeschlagen werden. Der weitere Umschlag 26 ist in das Tascheninnere 10 des Taschenbereichs 3 umgeschlagen, so daß die beiden ersten Schichten 11 aufeinanderliegen und über eine über die gesamte Breite B reichende Querverschweißung 28 verschweißt sind.

Weiterhin ist das Folienmaterial 2 auch im Bereich der Grifföffnung 25 des Umschlags 9 zweilagig. Hierzu ist der Umschlag 9 an seinem freien Ende selbst mit einem weiteren Umschlag 29 versehen. Im weiteren Umschlag 29 befindet sich eine fünfte Grifföffnung 30. Dieser weitere Umschlag 29 ist wie der weitere Umschlag 26 über eine Querverschweißung 31 verschweißt, wobei auch hierbei der weitere Umschlag 29 derart umgelegt ist, daß die ersten Schichten 11 aufeinanderliegen. Die Quererstrekkung der Querverschweißungen 28, 31 ist in Fig. 4 dargestellt, wobei darauf hinzuweisen ist, daß der obere Teil des Taschenbereichs 3 nur deshalb weggeklappt ist, um die Anordnung und Ausbildung des Druckverschlusses 16 näher darzustellen. Tatsächlich läßt sich der obere Teil des Taschenbereichs 3 nicht in der dargestellten Art und Weise wegklappen. Die Längsverschweißung 8 erstreckt sich bis über den Druckverschluß 16 hinaus.

Die in Fig. 1 und 2 dargestellte Tragetasche 1 wird aus einem einstückigen Zuschnitt 32 hergestellt, wie er in Fig. 9 dargestellt ist. Nach Herstellen des dreischichtigen Folienmaterials 2, d. h. nach Zusammenführen der aus unterschiedlichen Materialien bestehenden ersten, zweiten und dritten Schicht 11, 12, 13 wird von dem Folienmaterial 2 der Zuschnitt 32 geschnitten. Die Längsränder 6, 7 und gegebenenfalls auch die äußeren Querränder 33, 34 können jetzt verschweißt werden oder zu einem späteren Zeitpunkt.

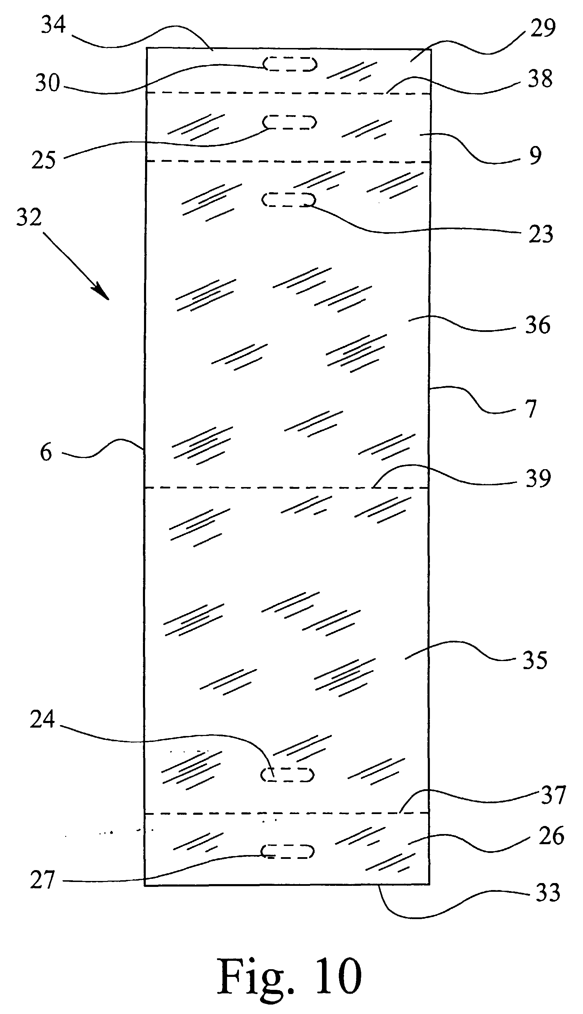

Der Aufbau des Zuschnitts 32 ist mit Bezug auf Fig. 10 von unten nach oben gesehen wie folgt. An den weiteren Umschlag 26 schließt sich eine Seite 35 des Taschenbereichs 3 und an diese die andere Seite 36 des Taschenbereichs 3 an. An die Seite 36 des Taschenbereichs 3 schließt sich der Umschlag 9 und an diesen der weitere Umschlag 29 an. Gestrichelt angedeutet sind die fünf Grifföffnungen, nämlich im weiteren Umschlag 26 die vierte Grifföffnung 27 und dieser benachbart in der Seite 35 die zweite Grifföffnung 24. Die nächste Grifföffnung, nämlich die erste Grifföffnung 23, ist in der Seite 36 des Taschenbereichs 3 vorgesehen. An diese schließen sich die dritte Grifföffnung 25 und die fünfte Grifföffnung 30 an.

Nach Herstellung des Zuschnitts 32 erfolgt die Herstellung der Tragetasche 1 derart, daß der weitere Umschlag 26 auf die Seite 35 um die Linie 37 umgeschlagen und querverschweißt wird. Außerdem wird der weitere Umschlag 29 um die Linie 38 umgeschlagen und ebenfalls querverschweißt. Sodann wird die Seite 35 um die Linie 39 umgeschlagen, so daß die beiden Seiten 35, 36 aufeinanderliegen. Zur Herstellung des Taschenbereichs werden die Seiten 35 und 36 dann längsverschweißt. Anschließend wird der Umschlag 9 auf die Seite 35 umgeschlagen und die Durchgangsgrifföffnung wird ausgestanzt. Die Tragetasche 1 (ohne Druckverschluß 16) ist dann fertiggestellt.

## Patentansprüche

1. Tragetasche (1) aus einem aus Kunststoff bestehenden Folienmaterial (2), mit einem Taschenbereich (3), mit einem Verschlußbereich (4) und mit einem Griffbereich (5), wobei das Folienmaterial (2) im Bereich des Taschenbereichs (3) zweilagig ist, wobei die beiden Lagen des Folienmaterials (2) zumindest an den beiden Längsrändern (6, 7) des Taschenbereichs (3) insbesondere über Längsverschweilßungen (8) miteinander verbunden sind, wobei das Folienmaterial (2) mehrschichtig ist und wenigstens eine erste, dem Tascheninneren (10) zugewandte Schicht (11) und eine zweite, außenseitige Schicht (12) aufweist und wobei zwischen den einzelnen Schichten (11, 12, 13) des Folienmaterials (2) jeweils ein Luftpolster (14, 15) vorgesehen ist, **dadurch gekennzeichnet**, daß auf die Außenseite der zweiten Schicht (12) eine Aluminium-Schicht oder -Beschichtung aufgebracht ist.

2. Tragetasche nach Anspruch 1, dadurch gekennzeichnet, daß die erste Schicht (11) aus einem HDPE besteht und/oder daß die zweite Schicht aus einem auf ihrer Außenseite mit Aluminium bedampften PE besteht.

3. Tragetasche nach Anspruch 1 oder 2, dadurch gekennzeichnet, daß das Folienmaterial (2) eine dritte, insbesondere aus einem aufgeschäumten PE bestehende Schicht (13) aufweist und daß die dritte Schicht (13) zwischen der ersten Schicht (11) und der zweiten Schicht (12) angeordnet ist.

4. Tragetasche nach einem der vorhergehenden Ansprüche, dadurch gekennzeichnet, daß der Verschlußbereich (4) wenigstens einen sich im wesentlichen über die gesamte Breite (B) der Tragetasche (1) erstreckenden Druckverschluß (16) aufweist und daß, vorzugsweise, der Druckverschluß (16) ein auf der einen Seite (35) vorgesehenes erstes Verschlußteil (17) mit einer zwischen zwei elastischen Schenkeln (19, 20) vorgesehenen Nut (21) und ein auf der anderen Seite (36) vorgesehenes zweites Verschlußteil (18) mit einem in die Nut (21) eindrückbaren weiteren Schenkel (22) aufweist.

5. Tragetasche nach einem der vorhergehenden Ansprüche, dadurch gekennzeichnet, daß der Verschlußbereich (4) wenigstens einen sich im wesentlichen über die gesamte Breite (B) der Tragetasche (1) erstreckenden Klebverschluß (40) aufweist und daß, vorzugsweise, der Klebverschluß (40) wenigstens einen Klebestreifen aufweist, dessen eine Klebeschicht im Ursprungszustand der Tragetasche (1) mit einer abziehbaren Schutzfolie versehen ist.

6. Tragetasche (1) aus einem aus Kunststoff bestehenden Folienmaterial (2), mit einem Taschenbereich (3), mit einem Verschlußbereich (4) und mit einem Griffbereich (5), wobei das Folienmaterial (2) im Bereich des Taschenbereichs (3) zweilagig ist, wobei die beiden Lagen des Folienmaterials (2) zumindest an den beiden Längsrändern (6, 7) des Taschenbereichs (3) insbesondere über Längsverschweißungen (8) miteinander verbunden sind, wobei der Verschlußbereich (4) einen von dem Folienmaterial (2) gebildeten, sich vorzugsweise über die gesamte Breite (B) der Tragetasche (1) erstreckenden Umschlag (9) aufweist, der zum Öffnen der Tragetasche (1) aufgeschlagen und zum Schließen auf den Taschenbereich (3) umgeschlagen wird, wobei der Griffbereich (5) im oberen Bereich des Taschenbereichs (3) auf gegenüberliegenden Seiten eine erste Grifföffnung (23) und eine zweite Grifföffnung (24) und im Umschlag (9) eine dritte Grifföffnung (25) aufweist und wobei die erste, die zweite und die dritte Grifföffnung (23, 24, 25) derart angeordnet und ausgebildet sind, daß sie im geschlossenen Zustand der Tragetasche (1) zumindest im wesentlichen miteinander ausgefluchtet sind, insbesondere nach einem der vorhergehenden Ansprüche, **dadurch gekennzeichnet**, daß der Verschlußbereich (4) im Bereich des Umschlags (9) zwischen der ersten Grifföffnung (23) und der dritten Grifföffnung (25) wenigstens einen sich im wesentlichen über die gesamte Breite (B) der Tragetasche (1) erstreckenden Verschluß, insbesondere einen Druckverschluß (16) und/oder einen Klebverschluß (40) aufweist.

7. Tragetasche nach einem der vorhergehenden Ansprüche, dadurch gekennzeichnet, daß das Folienmaterial (2) auf der dem Umschlag (9) gegenüberliegenden Seite des Taschenbereichs (3) im Bereich der zweiten Grifföffnung (24) zweilagig ist und daß, vorzugsweise, das Folienmaterial (2) einen weiteren, mit einer vierten Grifföffnung (27) versehenen Umschlag (26) aufweist und daß der weitere Umschlag (26) querverschweißt ist.

8. Tragetasche nach einem der vorhergehenden Ansprüche, dadurch gekennzeichnet, daß das Folienmaterial (2) im Bereich der dritten Grifföffnung (25) des Umschlags (9) zweilagig ist.

9. Tragetasche nach Anspruch 7, dadurch gekennzeichnet, daß das Folienmaterial (2) einen weiteren, mit einer fünften Grifföffnung (30) versehenen Umschlag (29) auf-weist und daß der weitere Umschlag (29) querverschweißt ist.

10. Tragetasche nach einem der vorhergehenden Ansprüche, dadurch gekennzeichnet, daß das Folienmaterial (2) zur Bildung des Taschenbereichs (3) umgeschlagen ist oder daß der Taschenbereich an seinem unteren Ende eine Querverschweißung aufweist und daß, vorzugsweise, die Tragetasche (1) aus einem einstückigen Zuschnitt (32) hergestellt ist.
